# EUROPEAN PATENT APPLICATION

(11) **EP 2 383 469 A1**
(43) Date of publication of application: **02.11.2011**
(21) Application number: 09834709.9
(22) Date of filing: 09.12.2009
(51) Int. Cl.: F03G 7/06, G02B 7/04

(54) **DRIVE MODULE AND ELECTRONIC DEVICE**

(30) Priority: 25.12.2008 JP 2008329166
(71) Applicant: Seiko Instruments Inc., Chiba-shi Chiba 261-8507 (JP)
(72) Inventor: NOBE, Tetsuya, Chiba-shi Chiba 261-8507 (JP)
(74) Representative: Cloughley, Peter Andrew
(86) International application number: PCT/JP2009/070590
(87) International publication number: WO 2010/073906

(57) **Abstract**

Provided is a driving module, including: a tubular or cylindrical body to be driven (4); a cylindrical support (5) for housing the body to be driven therein; a pair of plate spring members (6, 7) for elastically holding the body to be driven so that the body to be driven is movable in a fixed direction relative to the support; and driving means (10) for driving the body to be driven against a recovering force of the plate spring members, in which the plate spring members includes the first plate spring member (6) positioned on a side which does not receive a force generated by the driving means and the second plate spring member (7) positioned on the opposite side of the body to be driven from the first plate spring member, a spring constant of the first plate spring member being larger than that of the second spring member.

## Description

### Technical Field

The present invention relates to a driving module and an electronic apparatus. For example, the present invention relates to a driving module, which is suited for adjusting a focal position by driving an optical system or a mobile member or for being used as an actuator, and relates to an electronic apparatus.

### Background Art

Conventionally, in small electronic apparatuses such as mobile phones with cameras, in order to drive a body to be driven such as an image pickup lens unit, various driving modules which use the expansion and contraction of a shape memory alloy wire to drive the body to be driven has been proposed (for example, see Patent Literature 1).

For example, as illustrated in FIG. 13, in a driving unit 100 of Patent Literature 1, a plurality of plate springs 101 are used for supporting a lens so as to allow the lens to be moved in an optical axis direction. Further, a shape memory alloy wire 102 is supported at its both ends by a support 103, and substantially the central portion of the shape memory alloy wire is placed to be hooked over a hook 105 of a body to be driven 104. Then, power is supplied to the shape memory alloy wire 102 so as to increase a temperature of the shape memory alloy wire 102 and cause the shape memory alloy wire 102 to contract, thereby moving the body to be driven 104 up and down.

### Citation List

### Patent Literature

[PTL 1] WO 07/113478 A1

### Summary of Invention

### Technical Problems

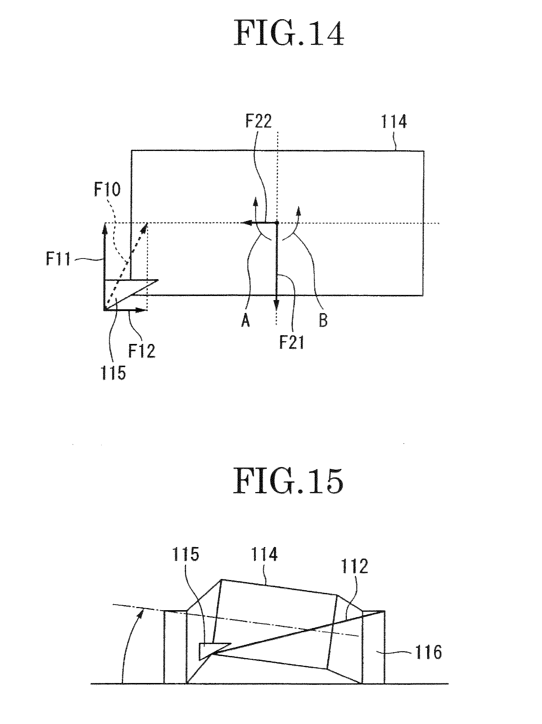

By the way, in a driving unit of Patent Literature 1, two sets of the hooks 105 and the shape memory alloy wires 102 are required in order to move the body to be driven 104 in an axial direction, which leads to complex structure. Further, it is difficult to equalize the driving forces of the two shape memory alloy wires 102, with the result that tilting of the body to be driven 104 may possibly occur. On the other hand, structure in which one shape memory alloy wire 102 is used for driving the body to be driven 104 is simple and easy to control. However, the body to be driven 104 is cantilevered so that the suspending side (side on which the hook 105 is formed) is lifted up and the opposite side thereof is lowered down, with the result that the optical axis may possibly be tilted. When the optical axis is tilted to a great extent, there may be a problem such as a phenomenon in which one side of a picked up image is out of focus, a so-called one-side blur.
Specifically, as illustrated in FIG. 14, when a shape memory alloy wire 112 (see FIG. 15) is placed to be hooked over a hook 115 of a body to be driven 114 and the shape memory alloy wire 112 is contracted so as to move the body to be driven 114 up and down, a force F10 is generated by the contraction of the shape memory alloy wire 112. More specifically, a force F11 is generated in a vertical direction (axial direction) and a force F12 is generated in a horizontal direction.
On the other hand, during the lifting of the body to be driven 114, a force F21 is generated downward from a center of gravity of the body to be driven 114 by a plate spring (not shown) placed on a top surface of the body to be driven 114. This is because the plate spring is formed in such a manner that a force is uniformly applied to the body to be driven 114 in a circumferential direction so that the axial direction of the lens mounted to the body to be driven 114 is not deviated. Thus, the force F21 is generated downward from the center of gravity of the body to be driven 114. Further, although the contraction of the shape memory alloy wire 112 causes the force F12 to be generated in the horizontal direction, the plate spring tends to regulate its displacement in a horizontal plane so that the axial direction of the lens mounted to the body to be driven 114 is not deviated, thereby generating a force F22 opposing the force F12. As a result, in the body to be driven 114, a moment A is generated by the forces F11 and F21 acting in the vertical direction, and a moment B is generated by the forces F12 and F22 acting in the horizontal direction. The moment A and the moment B are opposite in direction, and the force acting in the vertical direction is dominant over the force acting in the horizontal direction, and hence an absolute value of the moment A is larger than the absolute value of the moment B. Thus, as illustrated in FIG. 15, the body to be driven 114 is tilted toward the support 116.
On the other hand, it is possible to arrange the shape memory alloy wire also on the other side (opposite side) to thereby cause the shape memory alloy wire to be contracted at opposing two positions so as to move the body to be driven in the axial direction. However, this results in a problem in that the number of components is increased and miniaturization of the module is difficult.

Thus, in view of the above-mentioned circumstances, the present invention provides a driving module, which is capable of moving the body to be driven in the axial direction without tilting while achieving miniaturization, and an electronic apparatus.

### Solution to Problems

In order to solve the above-mentioned problems, the present invention provides the following means.
A driving module according to the present invention includes: a tubular or cylindrical body to be driven; a cylindrical support for housing the body to be driven therein; a pair of plate spring members for elastically holding the body to be driven so that the body to be driven is movable in a fixed direction relative to the support; and driving means for driving the body to be driven against a recovering force of the pair of plate spring members, in which the pair of plate spring members includes a first plate spring member positioned on a side which does not receive a force generated by the driving means and a second plate spring member positioned on the opposite side of the body to be driven from the first plate spring member, a spring constant of the first plate spring member being larger than the spring constant of the second spring member.

With this configuration, when the body to be driven is moved by the driving means, the second plate spring member which receives the force generated by the driving means is prone to be deformed in the horizontal direction. Thus, in the body to be driven, a moment due to the force acting in the horizontal direction becomes larger and cancels a moment due to the force acting in the vertical direction, thereby being capable of suppressing tilting of the body to be driven and regulating a movement of the body to be driven in an direction orthogonal to an axial direction. In other words, the body to be driven can be moved in the axial direction without tilting. Further, as described above, the spring constant of the plate spring members may only be partially adjusted and this can be achieved without increasing the number of components, and hence the driving module can be miniaturized.

Further, the driving means comprises a shape memory alloy wire which is engaged with the body to be driven and displaced due to heat generation when energized, thereby driving the body to be driven against the recovering force of the second plate spring member.

With this configuration, if the shape memory alloy wire is supported at its both ends by the support and engaged with an engaging point of the body to be driven, then the displacement of the shape memory alloy wire can cause the body to be driven to be moved relative to the support. In other words, the body to be driven can be moved simply by providing the shape memory alloy wire. Thus, the body to be driven can be moved by a simple configuration.

Further, the first plate spring member and the second spring member each include a spring portion, and the spring portion of the first plate spring member is formed to be wider than the spring portion of the second plate spring member.

With this configuration, the spring constant of the spring portion of the first plate spring member is larger than the spring constant of the spring portion of the second plate spring member. Thus, in the body to be driven, the moment due to the force acting in the horizontal direction becomes larger and cancels the moment due to the force acting in the vertical direction, thereby being capable of suppressing the tilting of the body to be driven. In other words, the body to be driven can be moved in the axial direction without tilting.

Further, the movement of the body to be driven in the direction orthogonal to the axial direction can be regulated by making a width of the spring portion of the first plate spring member wider than the width of the spring portion of the second plate spring member. Thus, the body to be driven can be more reliably moved in the axial direction without tilting.
Further, the spring portion of the first plate spring member is formed to be thicker than the spring portion of the second plate spring member.

With this configuration, the spring constant of the spring portion of the first plate spring member is larger than the spring constant of the spring portion of the second plate spring member. Thus, in the body to be driven, the moment due to the force acting in the horizontal direction becomes larger and cancels the moment due to the force acting in the vertical direction, thereby being capable of suppressing the tilting of the body to be driven. In other words, the body to be driven can be moved in the axial direction without tilting.

Further, the spring portion of the first plate spring member is shorter than the spring portion of the second plate spring member.

With this configuration, the spring constant of the spring portion of the first plate spring member is larger than the spring constant of the spring portion of the second plate spring member. Thus, in the body to be driven, the moment due to the force acting in the horizontal direction becomes larger and cancels the moment due to the force acting in the vertical direction, thereby being capable of suppressing the tilting of the body to be driven. In other words, the body to be driven can be moved in the axial direction without tilting.

Further, an electronic apparatus according to the present invention includes the driving module as described above.

The electronic apparatus according to the present invention includes a driving module, which is capable of moving the body to be driven in the axial direction without tilting while achieving miniaturization. Thus, miniaturization of the electronic apparatus can be achieved, and the electronic apparatus including the driving module with high accuracy and exhibiting high functionality can be provided.

### Advantageous Effects of Invention

In a driving module according to the present invention, when a body to be driven is moved by a driving means, a first plate spring member which receives a force generated by the driving means is less prone to be deformed. Thus, in the body to be driven, it is possible to suppress tilting of the body to be driven due to an increased movement amount of a side which receives a force generated by the driving means and to regulate the movement of the body to be driven in a direction orthogonal to an axial direction. In other words, the body to be driven can be moved in the axial direction without tilting. Further, as described above, the spring constant of the plate spring member may only be partially adjusted and this can be achieved without increasing the number of components, and hence the driving module can be miniaturized.

### Brief Description of Drawings

[FIG. 1] A perspective view illustrating a driving module according to an embodiment of the present invention.
[FIG. 2] An exploded perspective view illustrating a configuration of the driving module according to the embodiment of the present invention.
[FIG. 3] A exploded perspective view illustrating a configuration of a driving unit according to the embodiment of the present invention.
[FIG. 4] A perspective view illustrating the driving unit according to the embodiment of the present invention.
[FIG. 5] A cross-sectional view along the line A-A of FIG. 4.
[FIG. 6] A plan view illustrating an upper plate spring according to the embodiment of the present invention.
[FIG. 7] A plan view illustrating a lower plate spring according to the embodiment of the present invention.
[FIG. 8] An explanatory diagram illustrating an effect in moving a lens according to the embodiment of the present invention.
[FIG. 9] A plan view illustrating a first modification of the upper plate spring (lower plate spring) according to the embodiment of the present invention.
[FIG. 10] A plan view illustrating a second modification of the upper plate spring according to the embodiment of the present invention.

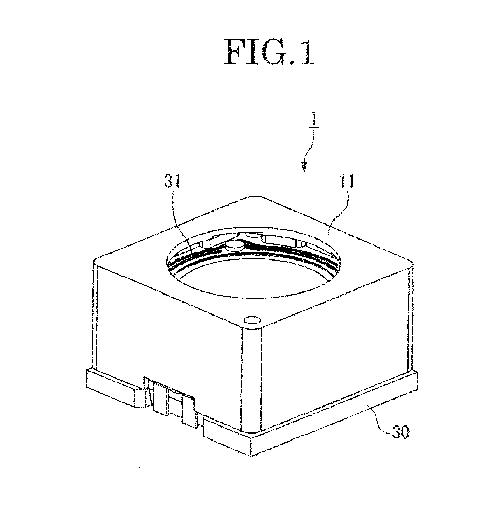

[FIG. 1] A plan view illustrating a second modification of the lower plate spring according to the embodiment of the present invention.

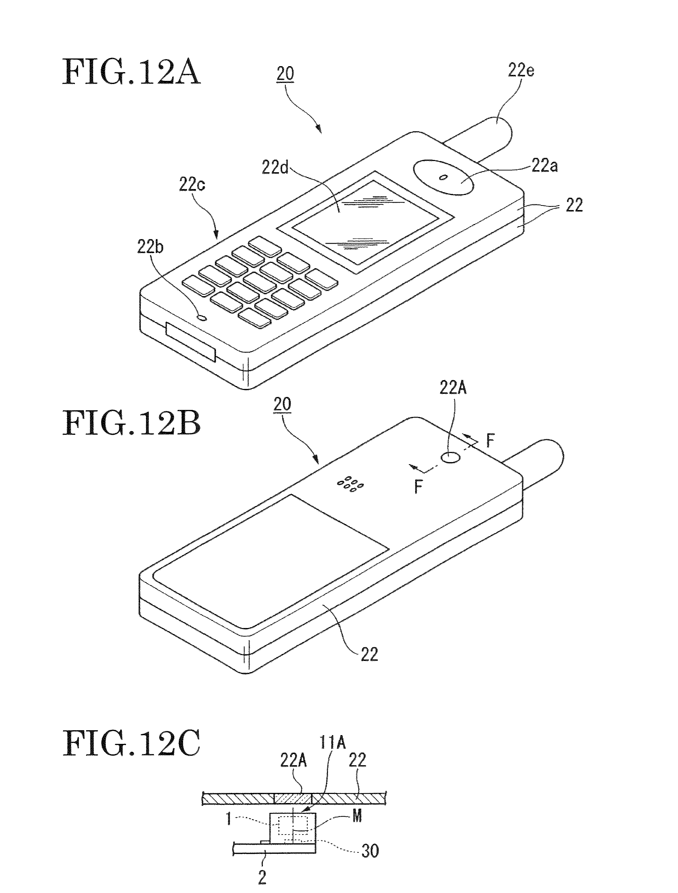

[FIGS. 12] Views illustrating an electronic apparatus according to the embodiment of the present invention, FIG. 12(a) is a perspective view of a front surface, FIG. 12(b) is a perspective view of a back surface, and FIG. 12(c) is a cross-sectional view along the line F-F of FIG. 12(b).

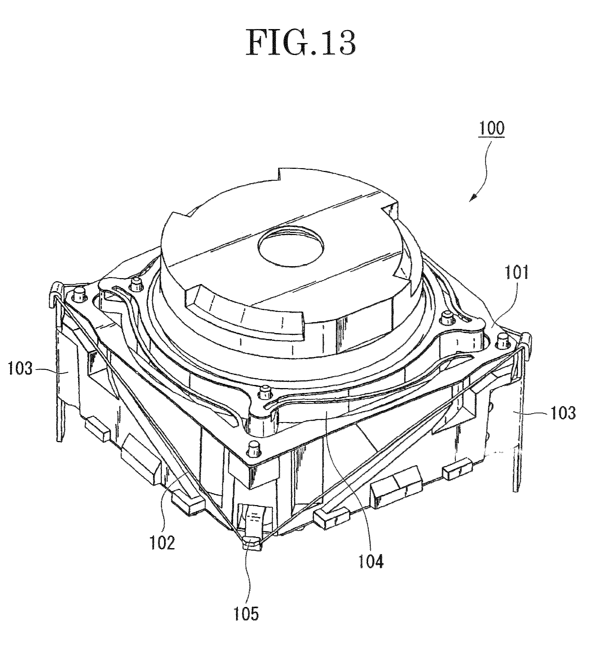

[FIG. 13] A perspective view of a conventional driving module.
[FIG. 14] An explanatory diagram illustrating an effect in moving a conventional lens frame.
[FIG. 15] An explanatory diagram illustrating a problem in moving a conventional lens frame.

### Description of Embodiment

An embodiment of a driving module according to the present invention is now described with reference to FIGS 1 to 11.

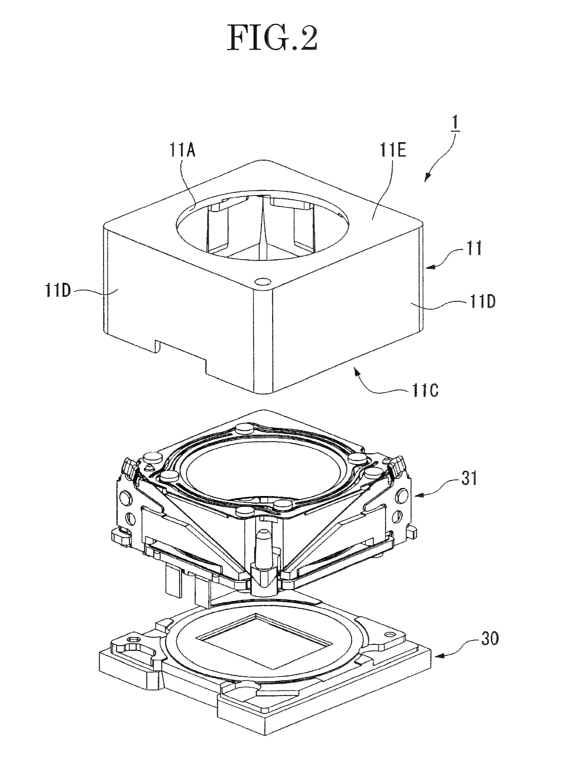

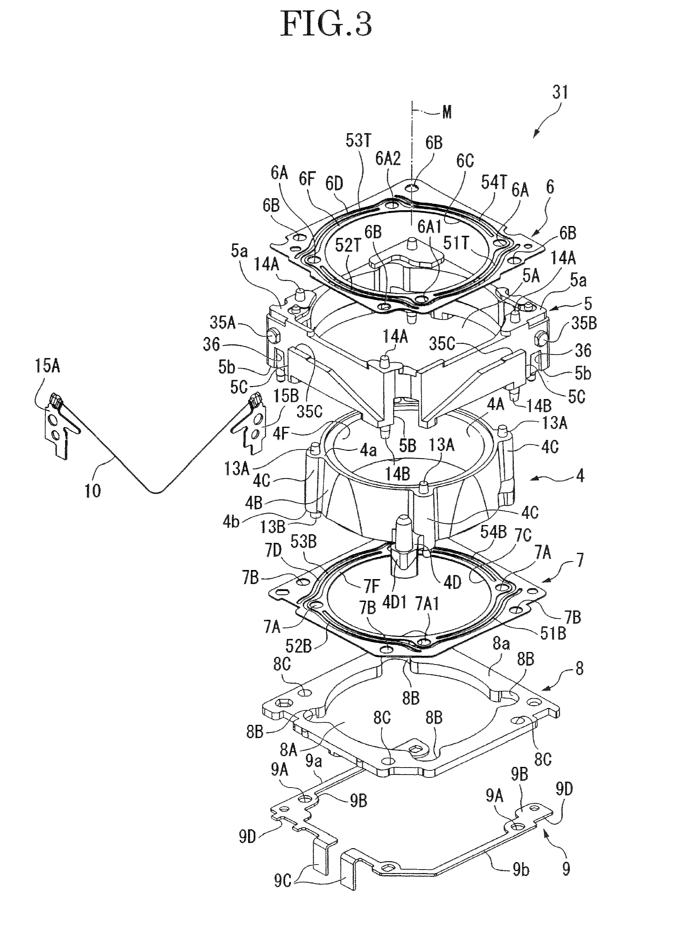

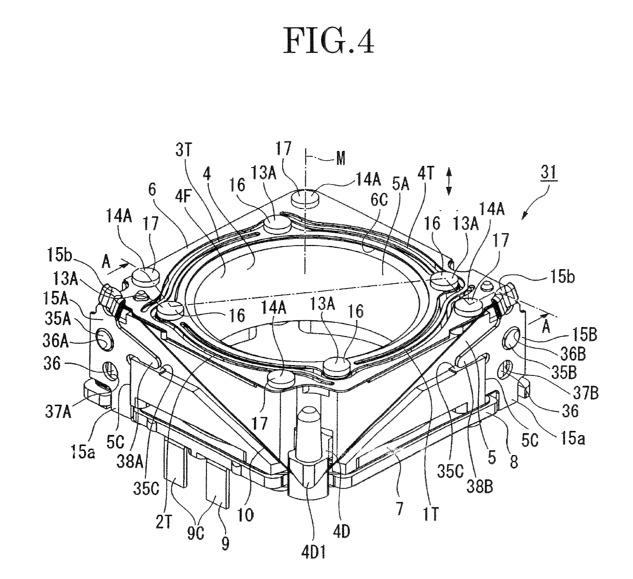

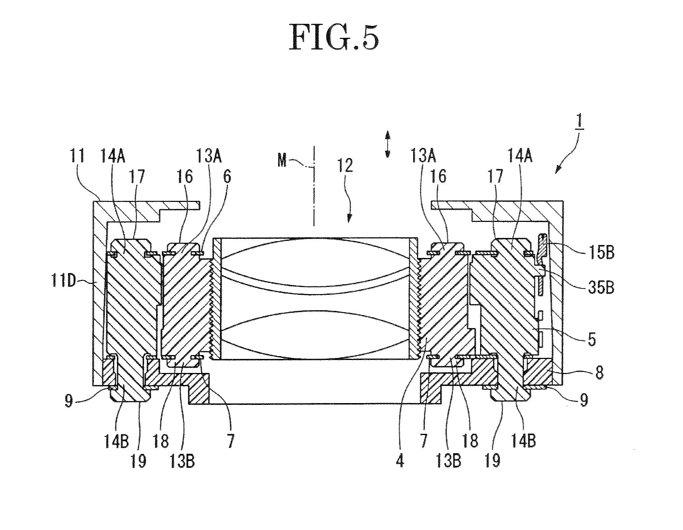

FIG. 1 is a perspective view illustrating a driving module according to an embodiment of the present invention. FIG. 2 is an exploded perspective view illustrating a schematic configuration of the driving module according to the embodiment of the present invention. FIG. 3 is an exploded perspective view illustrating a schematic configuration of a driving unit according to the embodiment of the present invention. FIG. 4 is a perspective view illustrating the driving unit according to the embodiment of the present invention. FIG. 5 is a cross-sectional view along the line A-A of FIG. 4. Note that, in order to improve the visibility, for example, components such as a lens unit 12 is omitted in some of the drawings as appropriate.

As illustrated in FIGS. 1 and 2, a driving module 1 according to this embodiment is formed into a box shape as a whole. The driving module 1 is mounted to an electronic apparatus or the like under a completely assembled state, then fixed on a substrate (not shown) for supplying control signals or power to the driving module 1 by fitting or adhering. The driving module 1 includes an adapter 30 positioned on the substrate, a driving unit 31 placed on the adapter 30, and a cover 11 placed to cover the driving unit 31.

As illustrated in FIG. 3, the driving unit 31 includes, as main components, a lens frame 4 to be a body to be driven, a module frame 5 to be a support, an upper plate spring 6 and a lower plate spring 7 to be plate spring members, a module lower plate 8, a feeding member 9, and a shape memory alloy (hereinafter, abbreviated as an SMA) wire 10, and those components are stacked integrally to constitute one actuator.

As illustrated in FIGS. 3 to 5, in the assembled state of those members, the lens frame 4 is inserted in the module frame 5, the upper plate spring 6 and the lower plate spring 7 are fixed by caulking while sandwiching the lens frame 4 and the module frame 5 in an up-and-down direction in the figure, and the module lower plate 8 and the feeding member 9 are stacked in this order from the lower side in the figure and fixed respectively by caulking from a lower side of the module frame 5. Note that, the cover 11 covering those laminates from an upper side is fixed to the module lower plate 8.

Note that, a symbol M in the figure denotes a virtual axis of the driving module 1 matched with the optical axis of the lens unit 12 (see FIG. 5), and indicates the driving direction of the lens frame 4. In the following, for simplicity of the description, even in the description of exploded components, the position and direction may be referred to based on the positional relationship with the axis M at a time of assembly. For example, even in the case where a clear circle and a cylindrical surface are not present in the components, as long as there is no fear of misunderstanding, the direction along the axis M may be referred to merely as an axial direction, and a radial direction and a circumferential direction of a circle with respect to the axis M may be referred to merely as a radial direction and a circumferential direction. Further, the up-and-down direction refers to an up-and-down direction in the arrangement in the case where the axis M is placed in a vertical direction and the attachment surface of the driving module 1 is placed on a lower side of the vertical direction, unless otherwise specified.

Among the components, the lens frame 4 to be the body to be driven is formed in a tubular shape as a whole as illustrated in FIG. 3, and a female screw is formed on an inner circumferential surface 4F of a housing portion 4A in a tubular shape, which passes through the center of the lens frame 4 and is formed coaxially with the axis M (see FIG. 5). Then, the lens unit 12 holding an appropriate lens or lens group on a lens barrel with a male screw formed on an outer circumferential portion can be screwed to be fixed to the housing portion 4A.
On an outer wall surface 4B of the lens frame 4, protrusions 4C protruding outward in a radial direction are provided so as to extend in the axial direction at an interval of 90° in a circumferential direction, and in upper ends and lower ends of the respective protrusions 4C, on end surfaces 4a, 4b formed of planes orthogonal to the axis M, four upper-side fixing pins 13A and lower-side fixing pins 13B, which respectively protrude upward and downward along the axis M are provided, respectively. The upper-side fixing pins 13A hold the upper plate spring 6, and the lower-side fixing pins 13B hold the lower plate spring 7.

Although the positions of the upper-side fixing pins 13A and the lower-side fixing pins 13B in a planar view may be different from each other, they are placed at coaxial positions parallel to the axis M in this embodiment. Therefore, the upper-side fixing pins 13A and the lower-side fixing pins 13B at the upper plate spring 6 and the lower plate spring 7 have insertion positions in common.

Further, although respective center positions in a radial direction of the upper-side fixing pins 13A and the lower-side fixing pins 13B may be different, they are placed on the same circumference in this embodiment. Therefore, the respective center positions are placed in a tetragonal lattice shape.

On the outer side in the radial direction of the lens frame 4, a guide protrusion 4D is provided so as to protrude outward in the radial direction from the lower end side of one protrusion 4C. As illustrated in FIG. 4, this guide protrusion 4D locks the SMA wire 10 with its tip end key portion 4D1, and is lifted to move upward (in an axially upward arrow direction) by contracting the SMA wire 10. Note that, the lens frame 4 is molded integrally with a thermoplastic resin capable of being caulked with heat or ultrasonic wave, such as a polycarbonate (PC) or a liquid crystal polymer (LCP) resin.

As illustrated in FIG. 3, the module frame 5 is a tubular member whose outer shape in a planar view is formed in a substantially rectangular shape as a whole, and in which a housing portion 5A formed of a through-hole is formed coaxially with the axis M in the central portion thereof. The lens frame 4 is housed in the housing portion 5A.

At upper and lower four corners of the module frame 5, there are formed end surfaces 5a, 5b formed of planes orthogonal to the axis M. Four upper-side fixing pins 14A are provided upward from the end surfaces 5a, and four lower-side fixing pins 14B are provided downward from the end surfaces 5b.

The upper-side fixing pins 14A hold the upper plate spring 6, and the lower-side fixing pins 14B hold the lower plate spring 7, the module lower plate 8, and the feeding member 9. Note that, although the positions of the upper-side fixing pins 14A in a planar view may be different from the positions of the lower-side fixing pins 14B, they are respectively placed at coaxial positions parallel to the axis M in this embodiment. Therefore, the upper-side fixing pins 14A and the lower-side fixing pins 14B at the upper plate spring 6 and the lower plate spring 7 have insertion positions in common. Further, a distance between the end surfaces 5a and 5b is set to be the same distance as the distance between the end surfaces 4a and 4b of the lens frame 4.

In a lower portion at one corner of the module frame 5, there is formed a cut-away portion 5B whose groove width in a planar view has a size that is fitted with the guide protrusion 4D of the lens frame 4 so as to move in the axial direction. The cut-away portion 5B allows the guide protrusion 4D of the lens frame 4 to pass through under a state in which the lens frame 4 is inserted to be housed in the module frame 5 from a lower side. The cut-away portion 5B allows the tip end key portion 4D1 of the guide protrusion 4D to protrude outward in the radial direction of the module frame 5, and determines the position of the lens frame 4 in the circumferential direction.

Further, at two corners adjacent to the cut-away portion 5B of the module frame 5, there is formed a pair of locking grooves 5C for attaching wire holding members 15A, 15B (see FIGS. 3 and 4) for holding the SMA wire 10 on a side surface on a side in the same direction as that of the corner at which the cut-away portion 5B is provided.
The wire holding members 15A, 15B are fixed to pins 35A, 35B respectively formed on a side surface of the module frame 5 through insertion. In each of the side surfaces of the module frame 5 on which the pins 35A, 35B are formed, a groove 36 is formed below the pins 35A, 35B, which groove is filled with adhesive so as to fix the module frame 5 and the wire holding members 15A, 15B. Further, a wall portion 35C is formed on each of the above-mentioned side surfaces so as to be able to suppress the rotation of the wire holding members 15A, 15B when fixing the wire holding members 15A, 15B to the module frame 5. The wall portion 35C is extended laterally from the side surface of the module frame 5 (in a direction perpendicular to the side surface). Note that, as with the lens frame 4, the module frame 5 in this embodiment is molded integrally with a thermoplastic resin capable of being caulked with heat or ultrasonic wave, such as a polycarbonate (PC) or a liquid crystal polymer (LCP) resin. Further, the wire holding member 15A is attached to the side surface on a side on which a pair of terminal portions 9C of the feeding member 9 protrude from the driving module 1, and the wire holding member 15B is attached to the side surface on a side on which the pair of terminal portions 9C of the feeding member 9 do not protrude from the driving module 1.
Further, the wire holding members 15A, 15B are conductive members such as a metal plate formed in a key shape, obtained by caulking an end portion of the SMA wire 10 to a wire holding portion 15b. In the wire holding members 15A, 15B, there are formed through-holes 36A, 36B, respectively, each of which fits with the pins 35A, 35B of the module frame 5. Further, below the through-holes 36A, 36B in an axial direction, there are formed through-holes 37A, 37B for pouring adhesive, respectively. In addition, arm portions 38A, 38B are formed in the wire holding members 15A, 15B, respectively, so as to abut the wall portions 35C of the module frame 5 to suppress the rotation of the wire holding members 15A, 15B when fixing the module frame 5 and the wire holding members 15A, 15B. The end portions of the SMA wire 10 are held in position by being laterally fitted with the locking grooves 5C and pins 35A, 35B and abutting the arm portions 38A, 38B against the wall portions 35C.

The wire holding members 15A, 15B each include a piece-like terminal portion 15a on the opposite side of the wire holding portion 15b (caulking position) of the SMA wire 10. The terminal portion 15a is adapted to protrude slightly below the module lower plate 8 stacked below the module frame 5 under a state in which the terminal portion 15a is attached to the module frame 5.
Further, the SMA wire 10 held on both ends by the pair of wire holding members 15A, 15B is locked from below with the tip end key portion 4D1 of the guide protrusion 4D of the lens frame 4 protruding from the cut-away portion 5B of the module frame, thereby upwardly biasing the lens frame 4 via the tip end key portion 4D1 by the tension of the SMA wire.

As illustrated in FIGS. 3 and 4, on each upper portion and each lower portion of the module frame 5 and the lens frame 4 inserted therein, the upper plate spring 6 and the lower plate spring 7 are stacked respectively.

In this embodiment, the upper plate spring 6 and the lower plate spring 7 are plate spring members in a plate shape punched into substantially the same shape in a planar view, and are formed of, for example, a metal plate such as stainless (SUS) steel plate.

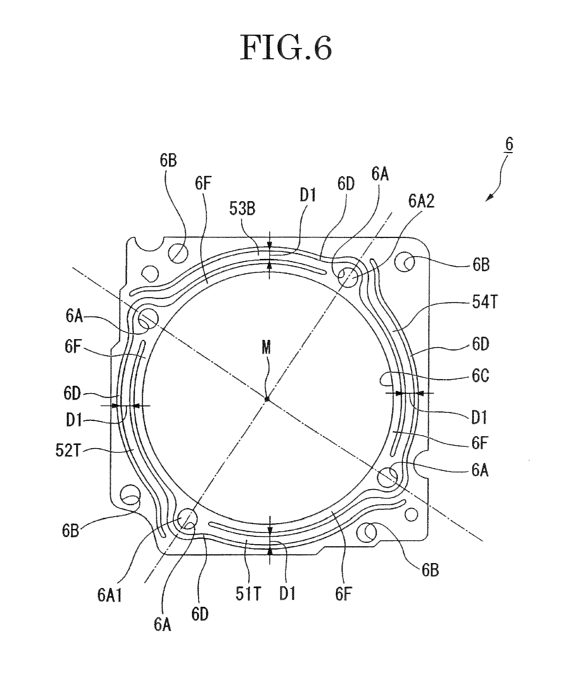

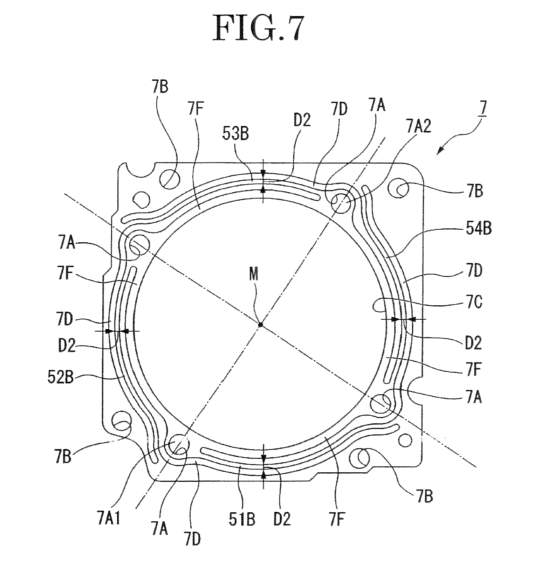

As illustrated in FIGS. 6 and 7, an outer shape in a planar view of the upper spring 6 (lower spring 7) is a substantially rectangular shape similar to that of an end on an upper side (lower side) of the module frame 5, and a circular opening 6C (7C) that is slightly larger than the inner circumferential surface 4F of the lens frame 4 and is coaxial with the axis M is formed at the center, and the upper plate spring 6 (lower plate spring 7) is formed in a ring shape as a whole.

In the vicinity of a corner of the upper plate spring 6 (lower plate spring 7), four through-holes 6B (7B) in which the upper-side fixing pins 14A (lower-side fixing pins 14B) can be inserted respectively are formed correspondingly to the arrangement positions of the upper-side fixing pins 14A (lower-side fixing pins 14B) formed in the vicinity of the corner of the module frame 5, which enables the positioning in a plane orthogonal to the axis M with respect to the module frame 5.

Further, on the upper plate spring 6 (lower plate spring 7), four through-holes 6A (7A) in which the upper-side fixing pins 13A (lower-side fixing pins 13B) can be inserted respectively are formed correspondingly to the arrangement positions of the upper-side fixing pins 13A (lower-side fixing pins 13B) formed on the lens frame 4.

Further, a ring portion 6F (7F) is formed on an outer side in a radial direction of the opening 6C (7C), and four slits 6D (7D) extending in a substantially semi-arc shape in a circumferential direction from positions in the vicinity of the through-holes 6A (7A) opposed to each other in a diagonal direction with the axis M interposed therebetween are formed in a state in which they overlap each other in a radial direction by a substantially quadrant arc.

Thus, four spring portions are formed so as to extend in a substantially quadrant arc shape from the rectangular frame on the outer side of the upper plate spring 6 (lower plate spring 7). Here, of the four spring portions, with respect to a through-hole 6A1 (7A1) formed in a position corresponding to the guide protrusion 4D, a spring portion formed on a side on which the wire holding member 15B is placed is referred to as a first spring portion 51 T (51 B), and a spring portion formed on a side on which the wire holding member 15A is placed is referred to as a second spring portion 52T (52B). Further, two other spring portions are referred to as a third spring portion 53T (53B) and a fourth spring portion 54T(54B), in clockwise order from the second spring portion 52T(52B). In other words, with respect to a through-hole 6A2 (7A2) formed on the opposite side of an opening 6C (7C) from the through-hole 6A1 (7A1), which is formed in a position corresponding to the guide protrusion 4D, a spring portion formed on a side on which the holding member 15A is placed is referred to as the third spring portion 53T (53B), and a spring portion formed on a side on which the holding member 15B is placed is referred to as the fourth spring portion 54T (54B).

In this way, the upper plate spring 6 (lower plate spring 7) is formed into a rectangular outer shape, which substantially corresponds to an outer shape of the module frame 5, and in which the first spring portion 51T (51 B) to the fourth spring portion 54T (54B) and the ring portion 6F (7F) are formed in a ring-like region along the opening 6C (7C). Further, corresponding to the arrangement of the upper-side fixing pins 14A (lower-side fixing pins 14B) for fixing the upper plate spring 6 (lower plate spring 7) to the module frame 5, through-holes 6B (7B), which are portions to be fixed, are provided in corners having enough space. Thus, the through-holes 6B (7B) can be positioned away from the first spring portion 51 T (51 B) to the fourth spring portion 54T (54B), with the result that the shape of the through-holes 6B (7B) is easily obtained by precise punching or etching.

Here, in this embodiment, the first spring portion 51T to the fourth spring portion 54T of the upper plate spring 6 are formed to have a width D1 larger than a width D2 of the first spring portion 51 B to the fourth spring portion 54B. Note that, the upper plate spring 6 and the lower plate spring 7 are formed to have the same thickness. With this configuration, a spring constant of the spring portions of the upper plate spring 6 is larger than the spring constant of the spring portions of the lower plate spring 7.

Next, the module lower plate 8 is used for stacking the lower plate spring 7 by sandwiching the lower plate spring 7 between the module lower plate 8 and the module frame 5 from the lower side under a state in which the respective lower-side fixing pins 14B of the module frame 5 are inserted in the through-holes 7B of the lower plate spring 7 and the respective lower-side fixing pins 13B of the lens frame 4 housed in the module frame 5 are inserted in the through-holes 7A of the lower plate spring 7, and fixing the outer frame in a rectangular shape of the lower plate spring 7 to the end surface 5b of the module frame 5 in a pressed state.

The module lower plate 8 is a plate member having a rectangular outer shape substantially similar to the outer shape of the module frame 5, and an opening 8A in a substantially circular shape with respect to the axis M is formed through the central portion of the module lower plate 8 in the thickness direction. Then, at a time of assembly, four U-shaped concave portions 8B for avoiding the interference with a caulking portion described later are formed at positions corresponding to the arrangement positions of the respective lower-side fixing pins 13B of the lens frame 4 on the upper surface 8a side to be stacked on the lower plate spring 7. Further, at the respective corners positioned at a circumferential edge of the module lower plate 8, through-holes 8C allowing the lower-side fixing pins 14B to be inserted therethrough are formed correspondingly to the arrangement positions of the respective lower-side fixing pins 14B of the module frame 5. As the material for the module lower plate 8, for example, a synthetic resin having an electric insulating property and a light-shielding property is adopted. Further, due to the electric insulating property, the module lower plate 8 functions as an insulating member that fixes the feeding member 9 to the lower plate spring 7 in an electrically insulated state.

The feeding member 9 includes a pair of electrodes 9a, 9b respectively made of a plate-shaped metal plate. The electrodes 9a, 9b are formed of a bent line shaped metal plate having a wiring portion 9B in a substantially L-shape along the outer shape of the module lower plate 8 and terminal portions 9C protruding to the outer side of the outer shape of the module lower plate 8 from the end of the wiring portion. Wiring portions 9B are provided with two through-holes 9A for positioning the electrodes 9a, 9b with respect to the module frame 5 by inserting two lower-side fixing pins 14B adjacent to each other along the outer shape of the module lower plate 8 of the lower-side fixing pins 14B of the module frame 5 protruding downward from the lower surface of the module lower plate 8.

As illustrated in FIG. 4, the terminal portions 9C of the electrodes 9a, 9b are provided in the module frame 5 so as to protrude in parallel to each other downward in the axial direction from the side surface on the side on which the wire holding member 15A is attached. Therefore, the electrode 9a is provided with a conductive connecting portion 9D that is cut away in a concave shape so as to electrically connect the terminal portion 15a of the wire holding member 15A to the side surface on the wiring portion 9B between the through-hole 9A and the terminal portion 9C.

Further, the electrode 9b includes a cut-away conductive connecting portion 9D formed in a connecting point in a side surface of the wiring portion 9B with respect to the terminal portion 15a of the wire holding member 15B. At this conductive connecting portion 9D, the electrode 9b and the wire holding member 15B are electrically connected to each other.

As means for electrically connecting the respective conductive connecting portions 9D to the terminal portions 15a, for example, adhesion through soldering or a conductive adhesive can be adopted.

Referring back to FIG. 2, the cover 11 is a member in which a side wall portion 11 D covering the module frame 5 from an outside of the module frame extends downward from an outer edge of an upper surface 11E, and an opening 11C in a rectangular shape is formed on a lower side thereof. A circular opening 11A with the axis M being the center is provided at the center of the upper surface 11E. The size of the opening 11A is designed so that the lens unit 12 can be taken in or out, for example.

The method of assembling the driving module 1 with such a configuration is described successively.

In a first step, first, the lens frame 4 is inserted in the housing portion 5A of the module frame 5 from a lower side, and each end surface 5a of the module frame 5 and the end surface 4a of the lens frame 4 are aligned to the same height. Then, the upper-side fixing pins 14A of the module frame 5 and the upper-side fixing pins 13A of the lens frame 4 are inserted in the respective through-holes 6B, 6A of the upper plate spring 6.
After that, the tip ends of the upper-side fixing pins 13A, 14A that protrude upward through the through-holes 6A, 6B of the upper plate spring 6 are caulked with heat by a heater chip (not shown), and hence caulking portions 16 serving as first fixing portions and caulking portions 17 serving as second fixing portions are formed (see FIGS. 4 and 5).
At this time, the end surface 4a of the lens frame 4 and the end surfaces 5a of the module frame 5 are aligned to the same plane. The flat-plate-shaped upper plate spring 6 can be placed without being deformed, and caulking with heat can be performed. Therefore, it is not necessary to press the upper plate spring 6 to be deformed, which makes it easy to perform caulking. Further, the floating caused by the deformation of the upper plate spring 6 can be prevented.

Further, the height of each heater chip can be set to be the same, and hence, the variation in caulking precision can be reduced even when the caulking portions 16, 17 are formed simultaneously.

Next, in a second step, the lower-side fixing pins 13B of the lens frame 4 are inserted respectively in the through-holes 7A of the lower plate spring 7. At this time, the lower-side fixing pins 14B of the module frame 5 are simultaneously inserted in the through-holes 7B of the lower plate spring 7, the through-holes 8C of the module lower plate 8, and the through-holes 9A of the feeding member 9. After that, the tip ends of the lower-side fixing pins 13B that protrude downward through the through-holes 7A of the lower plate spring 7 are caulked with heat by a heater chip, and hence caulking portions 18 serving as first fixing portions (see FIG. 5) are formed.

At this time, an axial distance between the end surfaces 4a, 4b of the lens frame 4 and an axial distance between the end surfaces 5a, 5b of the module frame 5 are equal, and hence the end surfaces 4b, 5b are aligned to the same plane. The flat-plate-shaped lower plate spring 7 can be stacked and placed on the module lower plate 8 without being deformed, and caulking with heat can be performed. Therefore, the floating caused by the deformation of the lower plate spring 7 can be prevented.

Further, the height of each heater chip can be set to be the same, and hence, the variation in caulking precision can be reduced even when the caulking portions 18 are formed simultaneously.

Next, in a third step, the lower ends of the lower-side fixing pins 14B that protrude downward through the through-holes 7B, 8C, and 9A are caulked with heat by a heater chip, and hence caulking portions 19 serving as second fixing portions (see FIG. 5) are formed.

At the time, the height of each heater chip can be set to be the same, and hence, the variation in caulking precision can be reduced even when the caulking portions 19 are formed simultaneously.

Further, the concave portions 8B are formed in the module lower plate 8, and hence the caulking portions 18 formed in the second step is not brought into contact with the module lower plate 8.

By performing the operations in the first to third steps, the upper plate spring 6, the lower plate spring 7, the module lower plate 8, and the feeding member 9 are stacked and fixed to both ends of the lens frame 4 and the module frame 5.

Note that, the upper-side fixing pins 13A and the lower-side fixing pins 13B, and the upper-side fixing pins 14A and the lower-side fixing pins 14B are provided respectively coaxially, and hence, in the caulking in the first to third steps, the positions on a plane of the heater chips for forming the caulking portions 16, 18 and the caulking portions 17, 19 become common, respectively. Therefore, it is not necessary to change the position of the heater chip in each caulking, which enables a caulking operation to be performed efficiently.

Next, in a fourth step (providing step), a pair of wire holding members 15A, 15B provided with the SMA wire 10 are fixed to the module frame 5. Specifically, the through-holes 36A, 36B of the wire holding members 15A, 15B are fitted with two pins 35A, 35B formed in the module frame 5, and the wire holding members 15A, 15B are locked respectively with the locking grooves 5C. At this time, the central portion of the SMA wire 10 is locked with the tip end key portion 4D1 of the guide protrusion 4D and placed across so as to support the tip end key portion 4D1 from a lower side. Further, the terminal portions 15a of the wire holding members 15A, 15B protrude to a lower side of the module lower plate 8 and are respectively locked with the conductive connecting portions 9D of the electrodes 9a, 9b that are the feeding member 9 fixed to the module lower plate 8, or placed in the vicinity thereof.

Next, in a fifth step (fixing step), a thermosetting adhesive is poured into the through-holes 37A, 37B so as to fill the grooves 36 of the module frame 5. When the grooves 36 are filled with the thermosetting adhesive, the module frame 5 and the wire holding members 15A, 15B are put into a heating furnace in order to cure the adhesive. In the heating furnace, heating is applied, for example, at approximately 100°C for about 20 to 30 minutes to cure the adhesive, as a result of which the module frame 5 and the wire holding members 15A, 15B are fixed to each other by adhesion.

After fixing the module frame 5 and the wire holding members 15A, 15B by adhesion, for example, the soldering or the conductive adhesive is used for electrically connecting the respective terminal portions 15a to the conductive connecting portions 9D.

Next, in a sixth step, the cover 11 is placed on the module frame 5 from above, thereby connecting the side wall portion 11D to the module lower plate 8. For example, an engagement hook or the like is provided at the side wall portion 11D, and the side wall portion 11 D is connected to the module lower plate 8 by fitting. Alternatively, the side wall portion 11 D and the module lower plate 8 are connected to each other by adhesion or welding. Further, the caulking portions 16, 17 are respectively away from a back surface of the upper surface 11E of the cover 11.

The assembly of the driving module 1 main body is completed.

Then, after the adapter 30 is attached to a lower portion of the drive unit 31, the drive unit 31 is attached onto the substrate. As the attachment of the driving module 1 to the substrate, fixing means such as adhesion and fitting can be adopted. Note that, the substrate may be an independent member belonging to the driving module 1, or a member connected to and placed at an electronic apparatus or the like.

Further, the lens unit 12 is screwed and fixed in the lens frame 4 through the opening 11A of the cover 11. The reason why the lens unit 12 is attached finally is to prevent the lens of the lens unit 12 from being contaminated or to prevent dust and the like from adhering to the lens during an assembly operation. For example, in the case where the driving module 1 is shipped in a product state with the lens unit 12 attached thereto, the case where the opening 11 A of the cover 11 is desired to be smaller than an outer shape of the lens unit 12, for example, the opening 11A is also used as a diaphragm, this step may be performed in the early phase (before the sixth step).

Next, operation of the driving module 1 is described.

In a state of the driving module 1 in which power is not supplied to the terminal portions 9C, the forces acting on the lens frame 4, such as the tension from the SMA wire 10 and a recovering force that elastically biases the caulking portions 16, 18 from the upper plate spring 6 and the lower plate spring 7, are balanced, and the lens frame 4 with the lens unit 12 attached thereto is held at a constant position in the axial direction.

When power is supplied from the terminal portions 9C to the feeding member 9, for example, the electrodes 9a, the wire holding member 15A, the SMA wire 10, the wire holding portion 15b, and the electrodes 9b are brought into conduction, and hence, a current flows through the SMA wire 10. When Joule heat is generated in the SMA wire 10 and the temperature of the SMA wire 10 is raised to exceed a transformation start temperature of the SMA wire 10, the SMA wire 10 contracts to the length in accordance with the temperature.

Consequently, the guide protrusion 4D of the lens frame 4 moves upward (in the axially upward arrow direction in FIGS. 4 and 5). Here, in this embodiment, the plate width D1 of the first spring portion 51 T to the fourth spring portion 54T of the upper plate spring 6, which are positioned above the lens frame 4, is configured to be larger than the plate width D2 of the first spring portion 51 B to the fourth spring portion 54B of the lower plate spring 7, which are positioned below the lens frame 4, so that the spring constant of the spring portions of the upper plate spring 6 is larger than the spring constant of the spring portions of the lower plate spring 7.

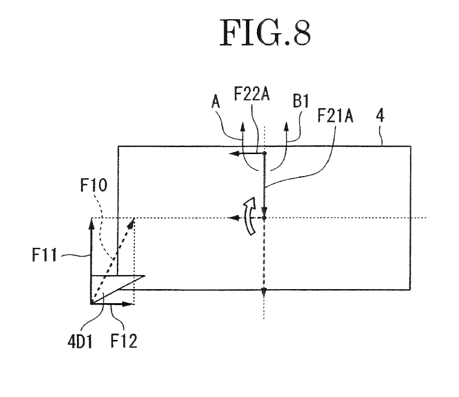

With this configuration, when the SMA wire 10 contracts to lift the lens frame 4, the deformation amount of the upper plate spring 6 can be reduced. More specifically, as illustrated in FIG 8, although a force F10 (force in an axial direction F11, force in an horizontal direction F12) is generated by the contraction of the SMA wire 10, an axial force F21A and a horizontal force F22A generated in the lens frame 4 can be shifted to the upper plate spring 6 side with respect to the center of gravity of the lens frame 4. Then, a distance between the forces F12 and F22A both acting in the axial direction is increased, and hence an absolute value of a moment B1 larger than a moment B can be obtained. Thus, the moment A and the moment B1 acting on the lens frame 4 are cancelled out each other, thereby enabling the moment acting on the lens frame 4 to be reduced and tilting of the lens frame 4 to be suppressed.
Then, each of the upper plate spring 6 and the lower plate spring 7 is deformed, and an elastic recovering force in response to the deformation amount is applied to the lens frame 4. Then, the lens frame 4 stops at a position where the elastic recovering force is balanced with the tension of the SMA wire 10.

Further, because the upper plate spring 6 and the lower plate spring 7 are parallel springs, the lens frame 4 is moved along the axis M without being axially guided by an guide member. Further, there is no sliding load generated on the guide member, and hence low power consumption can be achieved.

Further, when power supply is stopped, the SMA wire 10 becomes stretchable in such a manner that the lens frame 4 is moved to the downward balanced position (axially downward direction of FIGS. 4 and 5). In this way, the lens frame 4 can be driven in the axis M direction by controlling a power supply amount.

According to this embodiment, the spring constant of the first spring portion 51T to the fourth spring portion 54T of the upper plate spring 6, which are placed above the lens frame 4, is larger than the spring constant of the first spring portion 51 B to the fourth spring portion 54B of the lower plate spring 7, which are placed below the lens frame 4. Therefore, when the SMA wire 10 contracts to lift the lens frame 4, the lower plate spring 7, which receives the force generated by the SMA wire 10 (contraction force), is prone to be deformed in the horizontal direction. Thus, in the lens frame 4, a moment due to the force acting in the horizontal direction becomes larger and cancels a moment due to the force acting in the vertical direction, thereby being capable of suppressing the tilting of the lens frame 4 and regulating the movement of the lens frame 4 in a direction orthogonal to the axial direction (horizontal direction). In other words, the lens frame 4 can be moved in the axial direction without tilting. Further, the spring constant of the upper plate spring 6 and the lower plate spring 7 may only be partially adjusted as described above and this can be achieved without increasing the number of components, and hence the driving module 1 can be miniaturized.

Further, the lens frame 4 can be moved simply by providing the SMA wire 10 and contracting the SMA wire 10. Thus, the lens frame 4 can be moved by a simple configuration.
Further, simply by making the plate width D1 of the first spring portion 51 T to the fourth spring portion 54T of the upper plate spring 6 larger than the plate width D2 of the first spring portion 51 B to the fourth spring portion 54B of the lower plate spring 7, it is possible to make the spring constant of the upper plate spring 6 larger than the spring constant of the lower plate spring 7. Thus, the upper plate spring 6 and the lower plate spring 7 can be easily manufactured by etching or the like. In other words, the upper plate spring 6 (lower plate spring 7) having the desired performance can be easily manufactured.

Further, the first spring portion 51 T (51 B) to the fourth spring portion 54T (54B) of the upper plate spring 6 (lower plate spring 7) are all configured to have the same spring constant, and hence it is possible to regulate the movement of the lens frame 4 in the direction orthogonal to the axial direction (horizontal direction). Thus, the lens frame 4 can be more reliably moved in the axial direction without tilting.

Next, a first modification of this embodiment is described. Note that, the first modification only differs from the above-mentioned embodiment in the shapes of the upper plate spring and the lower plate spring, and otherwise has substantially the same configuration as the above-mentioned embodiment.

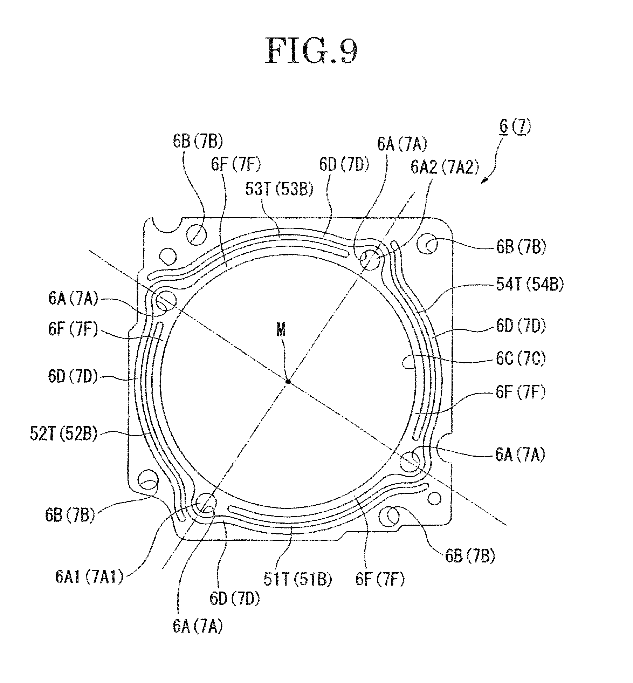

FIG. 9 is a plan view illustrating the upper plate spring (lower plate spring) according to the first modification of the Embodiment 1 of the present invention. As illustrated in FIG. 9, in the upper plate spring 6 (lower plate spring 7) of the first modification, unlike the above-mentioned embodiment, the first spring portion 51 T (51 B) to the fourth spring portion 54T (54B) of the upper plate spring 6 and the lower plate spring 7 all have the same plate width. However, the plate thickness of the first spring portion 51 T to the fourth spring portion 54T of the upper plate spring 6 is larger than the plate thickness of the first spring portion 51 B to the fourth spring portion 54B of the lower plate spring 7. Note that, the first spring portion 51 T to the fourth spring portion 54T of the upper plate spring 6 are all formed to have the same thickness, and the first spring portion 51 B to the fourth spring portion 54B of the lower plate spring 7 are all formed to have the same thickness. With this, the spring constant of the spring portions of the upper plate spring 6 is larger than the spring constant of the spring portions of the lower plate spring 7.
In order to partially change the plate thickness, the plate springs may be manufactured by, for example, half-etching. Further, the upper plate spring 6 may be manufactured by stacking plate materials only in positions of the first spring portion 51 T to the fourth spring portion 54T of the upper plate spring 6, or may be manufactured by increasing the thickness of the upper plate spring 6 as a whole. In other words, the upper plate spring 6 (lower plate spring 7) having the desired performance can be easily manufactured.
With this configuration, substantially the same effect as the above-mentioned embodiment can be obtained.

Next, a second modification of this embodiment is described. Note that, the second modification only differs from the above-mentioned embodiment in the shapes of the upper plate spring and the lower plate spring, and otherwise has substantially the same configuration as the above-mentioned embodiment.

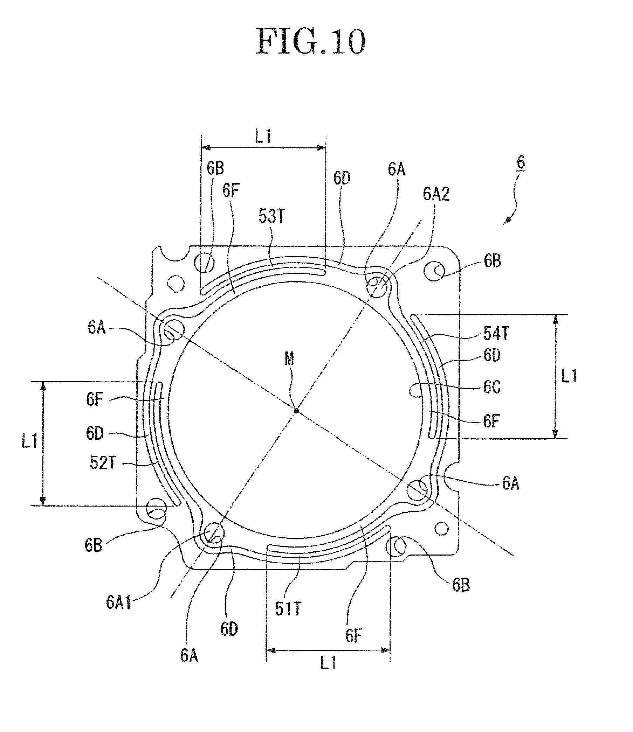

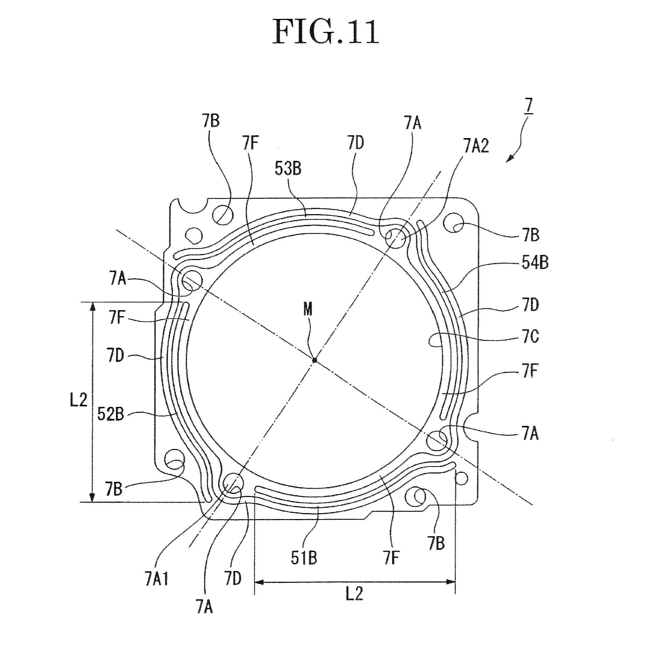

FIGS. 10 and 11 are plan views respectively illustrating the upper plate spring and the lower plate spring according to the second modification of the Embodiment 1. The upper plate spring 6 and the lower plate spring 7 of the second modification are, like the above-mentioned embodiment, formed to have the same plate thickness.
However, as illustrated in FIGS. 10 and 11, a length L1 of the first spring portion 51 T to the fourth spring portion 54T of the upper plate spring 6 is shorter than a length L2 of the first spring portion 51 B to the fourth spring portion 54B of the lower plate spring 7. With this, the spring constant of the spring portions of the upper plate spring 6 is larger than the spring constant of the spring portions of the lower plate spring 7.
With this configuration, substantially the same effect as the above-mentioned Embodiment 1 can be obtained.

Next, an electronic apparatus according to this embodiment of the present invention is described.

FIGS. 12(a) and 12(b) are external perspective views of a front surface and a back surface of an electronic apparatus according to the embodiment of the present invention. FIG. 12(c) is a cross-sectional view taken along the line F-F of FIG. 12(b).

A mobile phone 20 with a camera in this embodiment illustrated in FIGS. 12(a) and 12(b) is an example of an electronic apparatus having the driving module 1 according to the above-mentioned embodiment.

The mobile phone 20 with a camera includes well-known apparatus configurations of a mobile phone such as a receiving portion 22a, a sending portion 22b, an operation portion 22c, a liquid crystal display portion 22d, an antenna portion 22e, and a control circuit portion (not shown) inside and outside of covers 22.

Further, as illustrated in FIG. 12(b), a window 22A transmitting ambient light is provided in the cover 22 on a back surface of the side on which the liquid crystal display portion 22d is provided. As illustrated in FIG. 12(c), the driving module 1 of the above-mentioned embodiment is set so that the opening 11A of the driving module 1 faces the window 22A of the cover 22, and the axis M is placed along the normal direction of the window 22A.

Then, the driving module 1 is mechanically and electrically connected to the substrate 2. The substrate 2 is connected to the control circuit portion (not shown) so as to supply power to the driving module 1.

According to such a configuration, light transmitted through the window 22A is collected at the lens unit 12 (not shown) of the driving module 1 and can form an image on an image pickup element 30. Then, power is supplied appropriately from the control circuit portion to the driving module 1, and hence a focus position is adjusted by driving the lens unit 12 in the direction of the axis M to perform photographing.

The above-mentioned mobile phone 20 with a camera includes the driving module 1, which is capable of moving the lens frame 4 in the axial direction without tilting while achieving miniaturization. Thus, miniaturization of the mobile phone 20 with a camera can be achieved, and the mobile phone 20 with a camera including the driving module 1 with high accuracy and exhibiting high functionality can be provided.

Note that, the present invention is not limited to the above-mentioned embodiment but includes various modifications of the embodiment without departing from the spirit of the present invention. More specifically, the specific shapes and configurations listed in the embodiment are illustrative only, and may be modified as appropriate.
For example, in this embodiment, the case is exemplified where the upper-side fixing pins 13A, 14A and the lower-side fixing pins 13B, 14B are inserted in the upper plate spring 6 and the lower plate spring 7 as plate spring members for biasing the lens frame 4, and the tip portions of those fixing pins are caulked with heat. However, the method of fixing the plate spring members is not limited thereto. For example, the plate spring members may be fixed by caulking with ultrasonic wave, and the plate spring members may be bonded to the lens frame 4 or the module frame 5. According to this structure, a large adhesion area can be secured, and hence a large strength can be obtained even when the adhesive is used.

Further, in the above-mentioned description, the module frame 5 is a member generally formed into a substantially rectangular shape. However, the module frame 5 may have a polygonal shape without being limited to a substantially rectangular shape.

Further, in this embodiment, a configuration is used in which the SMA wire 10 is used for driving the lens frame 4. However this configuration can be equally applied to the case where a piezoelectronic element or a voice coil motor is placed to act on a part of the lens frame 4.

Further, in this embodiment, the case is described where the upper plate spring 6 and the lower plate spring 7 are plate spring members of substantially rectangular shape in a planar view each having fulcrums of the spring at its four corners. However, there may be adopted a plate spring member having such a shape that spring portions are formed at the four corners (spring portions are formed to be extended from the four corners along diagonal lines) and the fulcrum of the spring is formed at an intermediate position in a straight portion of a substantially rectangular shape. Further, there may be adopted a plate spring member including three spring portions placed every 120 degrees with respect to a substantially circular opening. More specifically, the number of the spring portions and the fulcrums formed in the plate spring member is not limited, and the same effect can be obtained by adjusting each spring constant so that the resultant force of the springs is obtained in the lens frame 4 in such a distribution as described above.

Further, in the above-mentioned description, the case where the driving module 1 is used in a focus position adjusting mechanism of a lens unit is exemplified. However, the use of the driving module is not limited thereto. For example, the driving module may be used in another portion as an appropriate actuator that moves a body to be driven to a target position. For example, the driving module can be used as an appropriate actuator by screwing a rod member or the like in place of the lens unit 12 or changing the lens frame 4 to another shape. More specifically, the body to be driven may include a columnar member without being limited to a tubular member.

Further, in the above-mentioned description, the electronic apparatus using the driving module is described in an example of a mobile phone with a camera. However, the kind of the electronic apparatus is not limited thereto. For example, the driving module may be used in an optical apparatus such as a digital camera or a camera built in a personal computer, or used as an actuator that moves a body to be driven to a target position in an electronic apparatus such as an information reading storage device and a printer.

### Reference Signs List

1 driving module
4 lens frame (body to be driven)
5 module frame (support)
6 upper plate spring (plate spring member, first plate spring member)
7 lower plate spring (plate spring member, second plate spring member)
10 SMA wire (shape memory alloy wire, driving means)
20 mobile phone with a camera (electronic apparatus)

## Claims

1. A driving module, comprising:
a tubular or cylindrical body to be driven;
a cylindrical support for housing the body to be driven therein;
a pair of plate spring members for elastically holding the body to be driven so that the body to be driven is movable in a fixed direction relative to the support; and
driving means for driving the body to be driven against a recovering force of the pair of plate spring members,
wherein the pair of plate spring members comprises a first plate spring member positioned on a side which does not receive a force generated by the driving means and a second plate spring member positioned on an opposite side of the body to be driven from the first plate spring member, a spring constant of the first plate spring member being larger than the spring constant of the second spring member.

2. A driving module according to claim 1, wherein the driving means comprises a shape memory alloy wire which is engaged with the body to be driven and displaced due to heat generation when energized, thereby driving the body to be driven against the recovering force of the second plate spring member.

3. A driving module according to claim 1, wherein the first plate spring member and the second spring member each include a spring portion, and the spring portion of the first plate spring member is formed to be wider than the spring portion of the second plate spring member.

4. A driving module according to claim 1, wherein the spring portion of the first plate spring member is formed to be thicker than the spring portion of the second plate spring member.

5. A driving module according to claim 1, wherein the spring portion of the first plate spring member is shorter than the spring portion of the second plate spring member.

6. An electronic apparatus comprising the driving module according to any one of claim 1.
